(19) Europäisches Patentamt
European Patent Office
Office européen des brevets

(11) EP 2 425 878 A1

(12) **EUROPEAN PATENT APPLICATION**

(43) Date of publication:
**07.03.2012 Bulletin 2012/10**

(21) Application number: **10009090.1**

(22) Date of filing: **01.09.2010**

(51) Int Cl.:
***A62D 5/00*** (2006.01) ***B01J 31/40*** (2006.01)
***C09D 5/00*** (2006.01) ***C09D 7/12*** (2006.01)
***A62D 3/30*** (2007.01) ***A62D 3/35*** (2007.01)

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Nederlandse Organisatie voor Toegepast -Natuurwetenschappelijk Onderzoek TNO**
**2628 VK Delft (NL)**

(72) Inventors:
- **de Koning, Martijn C.**
  **2628 VK Delft (NL)**
- **Alkema, Duurt Pieter Willem**
  **2628 VK Delft (NL)**

(74) Representative: **Jansen, Cornelis Marinus**
**VEREENIGDE**
**Johan de Wittlaan 7**
**2517 JR Den Haag (NL)**

# (54) Protective coating compostition

(57) The invention is directed to a coating composition comprising a curable compound and an N-alkylated hydroxamic acid. A coating composition of the invention can suitably be used to provide an object with a coating, wherein the coating forms a protective layer that can degrade organophosphates and thiophosphates. A coating (obtained after curing the coating composition) of the invention is in particular effective in degrading organophosphate and thiophosphates due to the N-alkylated hydroxamic acid according to formula (1) being able to function as a catalyst.

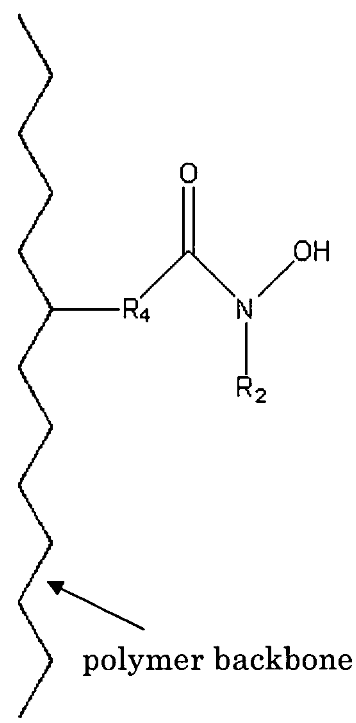


*Figure 1*

EP 2 425 878 A1

## Description

The invention is directed to a coating composition, a method for coating an object with said coating composition, a coated object, an N-alkylated hydroxamic acid, a method for catalytically degrading an organophosphate, a use of an N-alkylated hydroxamic acid and an N-alkylated hydroxamic acid for medical use.

Organophosphates are compounds that comprise a P=O bond and three other groups linked to the phosphor atom, for example one or more ester groups . Organophosphates may be toxic and are used as insecticides, herbicides, and chemical warfare agents such as nerve gases. Organophosphates can irreversibly inactivate acetylcholinesterase, which is essential to nerve function in insects, humans, and many other animals. Organophosphates affect this enzyme in varied ways.

Organothiophosphates are compounds similar to organophosphates. Organothiophosphates differ from organophosphates in that they comprise a P=S group instead of a P=O group. These compounds may be used for the same purposes as organophosphates. For example, a number of well known insecticides are monothiophosphate esters, including diazinon, parathion, and malathion. However, organothiophosphates are in general much less toxic than related organophosphates and inhibit acetylcholinesterase in mammals or insects to a much lesser extent.

Hydroxamic acids are known for their ability to detoxify organophosphates. In this process, organophosphate and hydroxamic acid form an intermediate, after which the organophosphate is degraded to one or more less toxic compounds and the hydroxamic acid is converted to an isocyanate via a mechanism called the Lossen rearrangement. (see also Stolberg, Journal of the American Chemical Societey, 1955, p. 765-767 and Hackley, Journal of the American Chemical Societey, 1955, p. 3651-3653). The disadvantage of using hydroxamic acids in the degradation of organophosphates is that they are consumed in the degradation process due to the Lossen rearrangement. Consequently, a stoichiometric amount or excess of hydroxamic acids is typically needed to detoxify organophosphorous compounds.

US 7,598,199 describes a nanoparticle comprising an inorganic metal oxide and a stabilizing compound comprising a nucleophilic moiety. The particle is referred to as a catalytic nanoparticle and may be used to catalytically destroy organophosphates. The particles can be used to decontaminate areas contaminated with nerve agents and/or pesticides, for example in gas masks, wearable protective garments and air filtration systems. The particles may be fabricated in the form of filters, sponges, wipes and powder. The nucleophilic moiety can be selected from a wide variety of oximes and hydroxamic acids, which hydroxamic acids are optionally substituted at the nitrogen position (N-substituted hydroxamic acid).

A disadvantage of US 7,598,199 is that a metal particle has to be used to catalyze the degradation of organophosphates. The absence of the metal particle may decrease the activity of the oxime or hydroxamic acid.

A disadvantage of US 7,598,199 is that the nanoparticles may not be suitable for use in a coating. The nanoparticles are preferably magnetic according to US 7,598,199. The polarity of such nanoparticles may be undesirable in a coating. For example, for certain polarities, the adherence between the nanoparticles and the coating may be undesirably low. Furthermore, the polarity of the nanoparticles may also cause the nanoparticles to cluster such that the nanoparticles can not be suitably distributed over the coating. Furthermore, the nanoparticles may interfere with curing of coatings.

A further disadvantage of US 7,598,199 is that, due to the high toxicity of nerve agents and the corresponding health risks, gas masks and protective garments comprising catalysts for degrading organophosphates should still be replaced as soon as possible after being contacted with a nerve agent. Therefore, there is a need for protective material that can easily be disposed and which is also quick and easy to apply to an object.

Object of the invention is to provide a novel composition that can serve as an alternative, in particular a composition that is improved with respect to at least one of the above disadvantages.

This object is met by providing a coating composition comprising a curable compound and an N-alkylated hydroxamic acid according to the formula

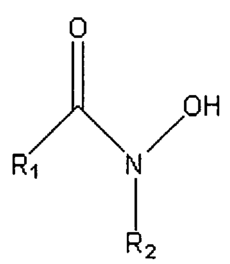

(1)

wherein $R_1$ is selected from the group consisting of alkyl groups, alkenyl groups, alkynyl groups, cycloalkyl groups, cycloalkenyl groups, cycloalkynyl groups, aryl groups, alkaryl groups, aralkyl groups, heteroalkyl groups, heteroalkenyl groups, heteroalkynyl groups, heterocycloalkyl groups, heterocycloalkenyl groups, heterocycloalkynyl groups, heteroaryl groups, heteroalkaryl groups, heteroaralkyl groups and polymeric moieties; and
wherein $R_2$ is selected from the group consisting of alkyl groups having 1-12 carbon atoms, cycloalkyl groups having 1-12 carbon atoms, aryl groups having 5-12 carbon atoms, alkaryl groups having 5-12 carbon atoms, aralkyl groups having 5-12 carbon atoms, heteroalkyl groups having 1-12 carbon atoms, heterocycloalkyl groups having 1-12 carbon atoms, heteroaryl groups having 3-12 carbon atoms, heteroalkaryl groups having 3-12 carbon atoms, heteroaralkyl groups having 3-12 carbon atoms.

A coating composition of the invention can suitably be used to provide an object with a coating, wherein the coating forms a protective layer that can degrade organophosphates and organothiophosphates.

A coating (obtained after curing the coating composition) of the invention is in particular effective in degrading organophosphate and organothiophosphates due to the N-alkylated hydroxamic acid according to formula (1) being able to function as a catalyst.

Furthermore, in an embodiment the invention provides a coating composition that can be rapidly and easily applied to an object.

Furthermore, in an embodiment, the coating on a coated object (formed after curing the coating composition of the invention) can easily be removed from the object when contaminated.

It has surprisingly been found that an organophosphate can be degraded using an N-alkylated hydroxamic acid according to formula (1) without converting the N-alkylated hydroxamic acid to an inactive form, such as an isocyanate, or at least in as far as any N-alkylated hydroxamic acid is converted, it is converted in a less than stoichiometric amount. Thus, the N-alkylated hydroxamic acid is at least partially recovered after degradation of the organophosphate. In particular it has been found that less than 1.0 moles, for example less than 0.5 moles, of N-alkylated hydroxamic acid is consumed per mole of organophosphate that is degraded in the presence of the N-alkylated hydroxamic acid. Consumption ratios as low as 0.23 moles of N-alkylated hydroxamic acid per mole of organophosphate have been found.

A further advantage of the N-alkylated hydroxamic acid is that they can even degrade organophosphates that are generally considered to be difficult to degrade, such as [(diisopropylamino)ethyl] methylphosphonothioate (VX). Furthermore, they can do this within a reasonable time frame.

The members of the group from which $R_2$ may be selected are chemical groups that are well known in the art. The skilled person will know what specific groups these chemical groups encompass.

Good results have been obtained when $R_2$ is selected from the group consisting of alkyl groups having 1-12 carbon atoms, cycloalkyl groups having 1-12 carbon atoms and aryl groups having 5-12 carbon atoms.

Particularly good results have been obtained using a relatively small $R_2$ group. The $R_2$ group is therefore preferably selected from the group consisting of alkyl groups having 1-6, preferably 1-3, carbon atoms and aryl groups having 3-8, preferably 5-6, carbon atoms and optionally cycloalkyl groups having 3-6 carbon atoms. In particular, the $R_2$ group may be methyl, ethyl, propyl, butyl, hexyl, pentyl, phenyl, tolyl or benzyl. Most preferably, the $R_2$ group is selected from the group consisting of methyl, ethyl, n-propyl, isopropyl, n-butyl and isobutyl.

The curable compound may be selected from the group of heat curable compounds, radiation curable compounds, evaporation curable compounds and chemically curable compounds. A heat curable compound is a compound that can be cured by treating it with heat. A radiation curable compound is a compound that can be cured by treating it with radiation and includes ultraviolet radiation and electron beam radiation. An evaporation curable compound is a compound that will cure after drying of the coating composition. A chemically curable compound is a compound that can be cured by treating it with certain chemical compounds.

The curable compound may be selected from the group consisting of monomers, curable oligomers and curable polymers. Curable compounds are known *per se.*

The curable compound may be selected from the group consisting of urethane oligomers, urethane-acrylate oligomers, urethane-methacrylate oligomers, acrylate oligomers, acrylate monomers, epoxy oligomers, epoxy monomers, alkyd oligomers, epoxy resins, polyester resins, acrylic resins and mixtures thereof.

In case the curable compound is a radiation curable compound, the curable compound may be selected from the group consisting of urethane oligomers, urethane-acrylate oligomers, urethane-methacrylate oligomers, acrylate oligomers, acrylate monomers, epoxy oligomers, epoxy monomers, alkyd oligomers and mixtures thereof. A urethane-(meth)acrylate oligomer as used herein may refer to an oligmer obtained by the reaction between a polyol (such as a polyether or a polyester), diisocyanate and
hydroxyalkyl(meth)acrylate .

The curable compound may be a urethane-(meth)acrylate oligomer. This curable compound refers to an oligomer obtained by the reaction between polyol, diisocyanate and hydroxyalkyl(meth)acrylate. The polyol may be selected from polyurethane polyol, polyamide polyol, polyether polyol, polyester polyol, polycarbonate polyol, hydrocarbon polyol, polysiloxane polyol and mixtures thereof.

In case the curable compound is a heat curable compound , the curable compound may be a resin. Such resins are known in the art. For example a resin may be used selected from the group consisting of epoxy resins, polyester resins and acrylic resins.

Epoxy resins are known in the art and may for example be selected from the group consisting of glycidyl epoxy resins, such as glycidyl-ether resins, glycidyl-ester resins and glycidyl-amine resins, and non-glycidyl epoxy resins, such as aliphatic or cycloaliphatic epoxy resins.

The composition may further comprise a curing agent, in particular when the curable compound is a heat curable compound. A curing agent may also be called a "hardener". Hardeners are known in the art per se. A curing agent may be selected from the group consisting of epoxies, isocyanates, dicarboxylic acids, ß-hydroxyalkylamides, amines, polyamides, phenolic resins, anhydrides, isocyanates and polymercaptans. Commonly used curing agents, in particular for epoxies, include amines, polyamides, phenolic resins, anhydrides, isocyanates and polymercaptans.

Typical combinations of resin and hardener (resin/hardener) are epoxy resins/curing agents; carboxyl- polyester/epoxies, hydroxyl-polyester/isocyanates, hydroxyl- acrylates/isocyanates, carboxyl-acrylates/epoxies, epoxy-acrylates/dicarboxylic acids, carboxyl-polyester/ ß-hydroxyalkylamides and carboxyl-acrylates/ß-hydroxyalkylamides.

The coating composition may further comprise one or more reactive diluents, in particular when the curable compound is a radiation curable compound. Such diluents are well known in the art. The total amount of diluent in the curable composition may vary depending on the desired properties, but may range from about 20 to 80 wt.%, more particular 30 to 70 wt.%, even more particular 40 to about 60 wt.%, based on the weight percent of the coating composition.

The coating composition may further comprise one or more photoinitiators, in particular in case the composition comprises radiation curable compounds. Such components are well known in the art. A photoinitiator may decompose into free radicals when exposed to light and/or provide for cationic polymerization. When present, the photoinitiators may be included in amounts ranging from about 0.5 wt.% to about 3 wt.% of the coating composition, and preferably from about 1 wt.% to about 2 wt.%.

The coating composition may further comprise one or more additives selected from the group consisting of antioxidants, adhesion promoters, thermal stabilizers, plasticizers, pigments, propellants and surfactants. Such components are well known in the art.

When present, the antioxidant component may be included, usually in amounts ranging from about 0.2 to about 1 wt.% of the curable composition.

The coating composition may comprise an adhesion promoter as an additive. An adhesion promoter enhances the adhesion of the cured coating onto the surface upon where it is coated. Such components are well known in the art. When present, the adhesion promoter may be included in amounts ranging from about 0.5 wt. % to about 2 wt.% of the curable composition.

The concentration of the N-alkylated hydroxamic acid may be 5 to 85 wt.%, in particular 10 - 30 wt.%, based on the total weight of the coating composition.

The concentration of the curable compound in the coating composition may be 20 to 80 wt.%, in particular from about 30 to 70 wt.%, more in particular from about 40 to 60 wt.%, based on total weight of the coating composition.

The coating composition may be an aqueous or an organic composition.

The coating composition may be a peelable coating composition. Such a coating composition is suitable for the temporary protection of the surface of an object by applying on the surface a coating which can be subsequently be easily removed from, more in particular peeled off, the surface. This is advantageous when the coating should be removed as soon as possible from the object, for example when it is contaminated with undesirable compounds, such as toxic compounds.

Peelable coating compositions are for example known under the tradenames SPRAYWRAP@ RT (obtainable from www.cal-west.net); Intergard 10220 (obtainable from AKZO); Boothcoat, Peelkleer, Floorpeel (obtainable from www.strippablecoating.com). By adding an N-alkylated hydroxamic acid to such coating compositions, a coating composition according to the invention may be obtained.

The $R_1$ is selected from the group consisting of alkyl groups, alkenyl groups, cycloalkyl groups, cycloalkenyl groups, aryl groups, alkaryl groups, aralkyl groups, heteroalkyl groups, heteroalkenyl groups, heterocycloalkyl groups, heterocycloalkenyl groups, heteroaryl groups, heteroalkaryl groups, heteroaralkyl groups and polymeric moieties.

The members of the group from which $R_1$ may be selected are chemical groups that are well known in the art. The skilled person will know what specific groups these chemical groups encompass.

In case the $R_1$ group is an alkyl group, $R_1$ may be an alkyl having 1 to 4 carbons; it may in particular be selected from the group of methyl, ethyl, propyl, isopropyl, butyl, isobutyl.

In case the $R_1$ group is an alkenyl group, $R_1$ may be an alkenyl having 2 to 4 carbons; it may in particular be selected from the group of ethenyl, propenyl, butenyl, isobutenyl.

In case the $R_1$ group is a cycloalkyl group, $R_1$ may have 3 to 8 carbons; it may in particular be selected from the group of cyclopropyl, cyclobutyl, cyclopentyl, cyclohexyl, cycloheptyl, cyclooctyl.

In case the $R_1$ group is a cycloalkenyl group, $R_1$ may have 3 to 8 carbons; it may in particular be selected from

the group of cyclopropenyl, cyclobutenyl, cyclopentenyl, cyclohexenyl, cycloheptenyl, cyclooctenyl.

In case the $R_1$ group is an aryl group, $R_1$ may have 6 to 12 carbons; it may in particular be selected from the group of phenyl, naphtyl.

In case the $R_1$ group is an alkaryl group, $R_1$ may have 7 to 16 carbons; it may in particular be selected from the group of tolyl, ethenylphenyl, butenylphenyl, carboxyphenyl.

In case the $R_1$ group is an aralkyl group, $R_1$may have 7 to 16 carbons; it may in particular be selected from the group of benzyl, alkoxybenyl (e.g. methoxybenzyl), nitrobenzyl, halogenbenzyl, ethoxybenzyl, dialkoxybenzyl (e.g. dimethoxybenzyl).

In case the $R_1$ group is a heteroalkyl group or a heteroalkenyl group, $R_1$may respectively be an alkyl group or alkenyl group substituted or otherwise provided with one or more N, O, S and/or halogen comprising groups. Examples of such N, O, S and/or halogen comprising groups are hydroxyl groups, carbonyl groups, aldehyde groups, carboxyl groups, ether groups, ester groups and halogens.

In case the $R_1$ group is a heterocycloalkyl group, heterocycloalkenyl group, heteroaryl group, heteroalkaryl group or a heteroaralkyl, the $R_1$ group may respectively be a cycloalkyl group, cycloalkenyl group, aryl group, alkaryl group or aralkyl group comprising one or more heteroatoms in its ring (which heteroatom is preferably chosen from nitrogen, oxygen, and sulfur) and/or a cycloalkyl group substituted with one or more N, O, S and/or halogen comprising groups. Examples of such N, O, S and/or halogen comprising groups are mentioned above.

In case the $R_1$group is a heteroalkyl group, $R_1$may be a haloalkyl group, a hydroxyalkyl group, an alkoxy group, a carboxy group, mercaptogroup or an amine. More specifically, $R_1$may be an aminoethyl, mercaptoethyl, hydroxyethyl, carboxyethyl, bromoethyl, bromoethyl, aminopropyl, mercaptopropyl, hydroxypropyl, bromopropyl, chloropropyl, iodopropyl.

In case the $R_1$group is a heteroalkenyl group, $R_1$ may for example be methoxyvinyl, aminoethenyl, hydroxyethenyl, carboxyethenyl.

In case the $R_1$ group is a heterocycloalkyl group, $R_1$may for example be pyrazinyl, piperidinyl, furanyl.

In case the $R_1$group is a heterocycloalkenyl group, $R_1$ may for example be cycloimine

In case the $R_1$group is a heteroaryl group, $R_1$may for example be a pyridinyl group (e.g. a 3-pyridinyl group), a nitrophenyl group, an alkoxyphenyl (e.g. methoxyphenyl), pyridinium group (e.g: a benzylpyridinium group), imidazolyl, tetrazolyl, thiazolyl.

In case the $R_1$ group is a heteroalkaryl group, $R_1$may for example be methoxybenzyl.

In a particularly preferred embodiment, the Ri group is selected from the group consisting of phenyl, tolyl, pyridinyl, alkylpyridinium, bromophenyl, chlorophenyl, methoxyphenyl.

In a further preferred embodiment, the $R_1$ group is a polymeric moiety. This polymeric moiety may be based on a polymer selected from the group consisting of polyethylene glycol, polyethene, polyarylic acid and polyamide.

In case $R_1$ is a polymeric moiety, the C(O)-N($R_2$)-OH group of formula (1) may be connected to the polymer backbone via a linker moiety $R_4$, such as depicted in Figure 1.

The linker moiety $R_4$ may be selected from the group consisting of alkane moieties, alkene moieties, cycloalkane moieties, cycloalkene moieties, arene moieties, alkarene moieties, aralkane moieties, heteroalkane moieties, heteroalkene moieties, heterocycloalkane moieties, heterocycloalkene moieties, heteroarene moieties, heteroalkarene moieties and heteroaralkane moieties. Examples of these groups correspond to those given for the corresponding $R_1$ groups described above. For example, the $R_4$ moiety may be a phenyl moiety, such as depicted in Figure 2.

In case $R_1$ is a polymeric moiety, $R_1$ may comprise one or more -C(O)-N($R_2$)-OH moieties (wherein $R_2$ is as defined above), in addition to the -C(O)-N($R_2$)-OH already present in formula (1). In this case, the compound according to formula (1) will thus be a polymer comprising two or more C(O)-N($R_2$)-OH groups. The $R_2$ groups in such a polymer may be chosen independently from each other. The presence of a plurality of C(O)-N($R_2$)-OH groups may increase the efficiency of the degrading process per polymer. It is expected that due to the local concentration of reactive groups, more organophosphates may be degraded per time unit.

The molecular weight of the polymeric moiety may be between 100 and 500,000 g/mole, for example between 1000 and 50,000 g/mole.

The $R_1$ group may also be a prepolymeric moiety. A prepolymeric moiety is a -generally polymeric or oligomeric moiety - capable of further polymerization by reactive groups to a higher molecular weight.

The $R_1$ group may comprise a monomeric moiety. Such a monomeric moiety may comprise one or more reactive groups such that it is capable of polymerization. Examples of such reactive groups are alkenyl groups, acryl groups, vinyl groups and photoreactive groups.

In a specific embodiment the $R_1$ group is a curable polymeric moiety. When using such a particular type of polymeric moiety, it may be possible to use only small amounts of the curable compound. It would even be possible that a compound according to formula (1) comprising a curable polymeric moiety as the $R_1$ group makes the presence of a second curable compound in the coating composition redundant. In such a particular embodiment of the invention, the compound according to formula (1) and the curable compound in the coating composition of the invention may be the

same polymer.

The coating composition may be substantially free of metal nanoparticles. In particular, the coating composition may be substantially free of catalytic metal particles, such as for example disclosed in US 7,598,199. The coating composition may even be substantially free of metal particles. The presence of metal particles may be redundant and may even interfere in the efficiency of the coating.

The invention is further directed to an N-alkylated hydroxamic acid according to formula (2) or (3):

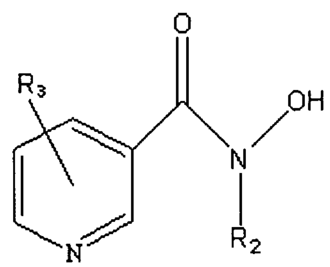

(2)

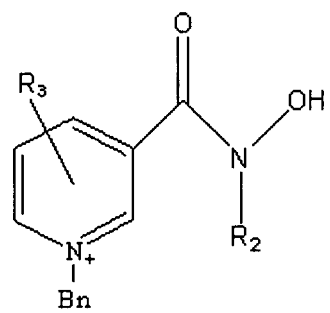

(3),

wherein $R_2$ is as defined above, in particular an alkyl as defined above, more in particular methyl.
wherein Bn is benzyl, an alkyl or a polymeric moiety; and
wherein $R_3$ is selected from the group consisting of hydrogen, alkyl and polymeric moieties.

Good results were obtained with $R_3$ being hydrogen.

Good results were obtained with Bn being benzyl.

In case Bn is a polymeric moiety, $R_3$ is preferably hydrogen or alkyl.

In case $R_3$ is alkyl, $R_3$ may for example be an alkyl having 1-5 carbon atoms, such as methyl, ethyl or propyl, preferably methyl.

In case Bn is alkyl, Bn may for example be an alkyl having 1-5 carbon atoms, such as methyl, ethyl or propyl, preferably methyl.

An N-alkylated hydroxamic acid according to formula (2) or (3) can be suitably used in the coating composition of the invention.

Examples of organophosphate and organothiophosphate compounds that can be degraded using the coating composition, compounds or method of the invention include phosphates, phosphorofluoridates, phosphonates, and their sulfur analogs such as phosphorothionates and monothiophosphate esters. Examples of organophosphate esters include parathion, malathion, diazinon, phosmet (Imidan(R)), chlorpyrifos (Lorsban(R)), sarin, tabun (Ethyl N,N-Dimethylphosphoramidocyanidaat), soman (pinacolyl methylphosphonofluoridate), GF (Cyclohexyl methylphosphonofluoridate) and VX (O-Ethy1S-[2-(diisopropylamino)ethy1] methylphosphonothioate).

The organophosphates and organothiophosphates that can be degraded using the coating composition, compounds or method of the invention are typically compounds according to the following formula (4)

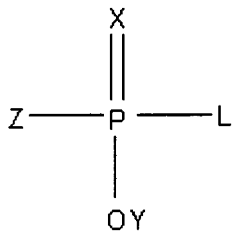

(4)

wherein

X is selected from the group consisting of S and O;

Y is selected from the group consisting of alkane, alkene, cycloalkane, alkarene, aralkane, heteroalkane, heteroalkene, heterocycloalkane, heteroalkarene, heteroaralkane;

L is a leaving group; and

Z is an organic group.

In case X=O, compound (4) is an organophosphate. In case X=S, compound (4) is an organothiophosphate.

Y may for example be methyl, ethyl, propyl, dimethylethanamine, cyclopentane and cyclohexane. Further examples of the different types of Y groups are similar to the corresponding $R_1$ groups described above.

Leaving groups are known in the art per se. L may for example be selected from the groups consisting of halogens, cyanide, thiol. For example, L may be fluoride, chloride, cyanide (CN), 2-(diisopropylamino)ethanethiolate.

Z may be selected from the group consisting of alkane, alkene, cycloalkane, alkarene, aralkane, heteroalkane, heteroalkene, heterocycloalkane, heteroalkarene, heteroaralkane. Examples of the different types of Z groups are similar to the corresponding $R_1$ groups described above. For example, Z may be methyl, ethyl, ethoxy, dimethylamine.

Examples of nerve agents according to compound (4) are the nerve agents belonging to the G-series, V-series and Novichok agents. Such nerve agents include tabun, sarin, soman, cyclosarin, DFP, VX, VE, VG, VM, VR.

The invention is further directed to a method for coating an object comprising applying a coating composition of the invention to a surface of an object and curing the coating composition.

Applying the coating to the surface of an object may be conducted in any way known in the art. For example, the coating composition can be applied by spraying the composition onto the surface or by dipping the object into the coating composition (dipcoating).

The coating may be applied in one or more layers. For these layers, the same or a different coating composition may be used.

Curing refers to the hardening of the curable coating composition. Curing of the coating may be conducted in any way known in the art. For example, curing may be conducted by exposing the coating composition to heat, ultraviolet radiation, electron beam or chemicals. Curing typically includes cross-linking of the curable compound in the curable coating composition.

Preferably, the coating is cured by exposing the coating to the air or to UV light, in particular sun light. Exposure to the air may result in contacting the coating composition to oxygen, which compound may function as a curing agent. Exposure to sun light is an easy and cheap way of exposing a coating composition to UV light.

The type of radiation that may be used to cure radiation curable coating compositions should be that which is capable of initiating the polymerization of one or more radiation curable compounds present in such a coating. Radiation suitable for curing such coatings is well known, and includes ultraviolet light and electron beam.

The object may be a vehicle, a building or objects made from textile materials. In case the object is a vehicle, the vehicle may for example be a car, a helicopter, a tank or a truck. Examples of objects made from textile are tents, filters and protective clothing, such as gas masks.

The invention is further directed to an object comprising a coating, which coating comprises a polymeric matrix and an N-alkylated hydroxamic according to formula (1), (2) or (3). Such an object may be obtained by the method of the invention described above.

The N-alkylated hydroxamic present in the coating may be the same as described above for the coating composition.

The polymeric matrix may comprise a polymer selected from the group consisting of polyurethane, polyurethane-acrylate, polyurethane-methacrylate, polyacrylate, epoxy, polyalkyd and polyester.

The coating may further comprise additives, in particular additives selected from the group consisting of antioxidants, adhesion promoters, thermal stabilizers, plasticizers, pigments, propellants and surfactants.

The coating should be thick enough for efficient organophosphate degradation. With respect to the costs, the coating should on the other hand be as thin as possible (but thick enough to maintain a good organophosphate degradation). The coating may have a thickness of 0.005 to 5 mm, for example a thickness of 0.01 to 1 mm, a thickness of 0.025 to 0.5 mm or a thickness of 0.05 - 0.25 mm.

The polymeric matrix may be present in the coating in an amount of 1- 99.9 wt.%, particularly 50-99 wt.%, more particularly 70-98 wt.%, based on the total weight of the coating.

The N-alkylated hydroxamic acid may be present in the coating in an amount of 1 to 90 wt.%, preferably 10 to 20 wt.%, based on the total weight of the coating.

Preferably, the coating is a peelable coating. Peelable coatings are for example known under the tradenames SPRAYWRAP® RT (obtainable from www.cal-west.net); Intergard 10220 (obtainable from AKZO); Boothcoat, Peelkleer, Floorpeel (obtainable from www.strippablecoating.com). Such coatings may be used for the coated object of the invention, although an N-alkylated hydroxamic acid should be applied into or onto these coatings to obtain the coating of the invention.

The object may be the same as defined above for the coating method of the invention. For example, the object may be a vehicle such as an automobile or a tank.

The invention is further directed to a method for catalytically degrading an organophosphate or thiophosphate, comprising contacting the compound with an N-alkylated hydroxamic acid according to formula (1), as defined above for the coating composition, or according to formula (2) or (3) as describe above.

In US 7,598,199, a broad range of hydroxamic acids and N-substituted hydroxamic acids are described. It has been found that a particular selection of the (N-substituted) hydroxamic acids described in US 7,598,199 have superior properties when used in a method for degrading organophosphates or thiophosphates. In particular it has been found that less than 1.0 moles of N-alkylated hydroxamic acid are consumed per mole of organophosphate that is degraded in the presence of the N-alkylated hydroxamic acid, more in particular less than 0.75 moles per mole of organophosphate, for example less than 0.5 moles per mole of organophosphate. Thus, the N-alkylated hydroxamic acid according to formulas (1), (2) and (3) may be used as a catalyst for degrading an organophosphate or thiophosphate.

The invention is further directed to an N-alkylated hydroxamic acid according to formulas (1), (2) or (3) for use in the treatment of pesticide intoxication, insecticide intoxication or nerve agent poisoning.

Many organophosphates are potent nerve agents, functioning by inhibiting the action of acetylcholinesterase (AChE) in nerve cells. They are one of the most common causes of poisoning worldwide, and are frequently intentionally used in suicides in agricultural areas. Their toxicity is not limited to the acute phase, however, and chronic effects have long been noted. Neurotransmitters such as acetylcholine (which is affected by organophosphate pesticides) are important in the brain's development, and many organophosphates have neurotoxic effects on developing organisms, even from low levels of exposure.

From a publication by Gilbert et al. (archives of biochemistry and biophysics 1961, 99, p.469-475) it is known that hydroxamic acid has the ability to reactivate acetylcholinesterase inhibited by isopropyl methylphosphonofluoridate.

The inventors have realized that N-alkylated hydroxamic acid may be used in the treatment of a persons suffering from pesticide intoxication, insecticide intoxication or nerve agent poisoning, in particular when acetylcholinesterase is inhibited in such a person.

The inventors further realized that N-alkylated hydroxamic acid according to formulas (1), (2) or (3) will be preferred over hydroxamic acid in a treatment of pesticide intoxication, insecticide intoxication or nerve agent poisoning. Without wishing to be bound by any theory, it is postulated that reactivation of organophosphate-inhibited cholinesterases would produce, via Lossen rearrangement of the intermediate formed after liberation of the enzyme by a hydroxamic acid, an isocyanate which could in turn permanently block the enzyme again by reaction with one of the enzyme's amino acid residues. The formation of isocyanate and the accompanying blockage of the enzyme is therefore expected to be prevented by use of an N-alkylated hydroxamic acid.

The dosage of N-alkylated hydroxamic acid administered to a person suffering from pesticide intoxication, insecticide intoxication or nerve agent poisoning may be 10 - 1000 mg per day, in particular 50 - 500 mg per day.

Furthermore, the invention is directed to the use of an N-alkylated hydroxamic acid according to formulas (1), (2) or (3) in a decontamination solution and to a decontamination solution comprising an N-alkylated hydroxamic acid according to formulat (1), (2) or (3). The composition of decontamination solutions is known in the art.

A decontamination solution can be used to clean objects, such as buildings, vehicles and protective clothing, which objects are contaminated with e.g. organophosphates or organothiophosphates, by contacting the contaminated objects with the solution.

The N-alkylated hydroxamic acid in the different aspects of the invention may have substantially no interaction with metal nanoparticles. In particular, the N-alkylated hydroxamic acid may have substantially no interaction with catalytic metal particles, such as for example disclosed in US 7,598,199. The N-alkylated hydroxamic acid may even have substantially no interaction with metal particles.

The invention will be illustrated in the following examples. The structure of the compounds referenced to as 10a - 10g can be found in Table 1.

Example 1: Catalytic Degradation of VX by N-alkylated Hydroxamic Acid

An experiment was conducted wherein the nerve agent VX was degraded by bringing it in contact with hydroxamic acid and with a number of N-alkylated hydroxamic acids.

VX was selected as the nerve agent, because it is considered to be one of the most difficult OPs to degrade.

First, the reaction of 2 equivalents of VX with 1 equivalent non-alkylated 4-methylbenzohydroxamic acid (25 mM) in aqueous buffer at pH 7.6 was conducted. The progress of the reaction was followed by $^{31}$P-NMR. The spectra showed gradual decrease of VX (61 ppm) and the formation of the desired hydrolysis product, the relatively non-toxic ethylmethylphosphonic acid (EMPA, 26 ppm). The percentage of degradation was determined by measuring the resonance integral values and plotted against time (see Figure 3). After 4 days (data not shown), about 70% of the VX was degraded, from which about 20% can be ascribed to spontaneous hydrolysis of the VX giving EMPA and a small amount of E2192 (42 ppm, ca. 3%). In addition, HPLC analysis of the reaction mixture revealed the near complete conversion of the 4-methylbenzohydroxamic acid (rt 11.4 min) into a more lipophilic product (rt 16.6 min), thus confirming that Lossen rearrangement of the phosphonylated 4-methylbenzohydroxamic acid had occurred, and that the corresponding isocyanate had reacted with the liberated 2-(diispropylamino)ethanethiol.

In contrast, when the reaction was repeated using the corresponding N-Methyl-4-methylbenzohydroxamic acid (10a), complete conversion of the excess (2 equivalents) VX into EMPA was observed within 18 hours (see Figure 3) and the formation of the intermediate: the phosphonylated hydroxamic acid (42 ppm).

Using LC tandem MS-MS-spectroscopy and $^{1}$H NMR (PRESAT) revealed the formation of two catalyst breakdown products: 4-methylbenzoic acid and 4-methylbenzamide. Based on these observations a model was made that described the reaction kinetics (see Figure 4). In this model the recovery factor was defined to be the fraction of catalyst that survived each VX degradation cycle and was estimated by measuring the fraction of intact catalyst after depletion of VX by NMR or HPLC and back-calculating the loss for each VX degradation cycle. The recovery factor for N-Methyl-4-methylbenzohydroxamic acid (10a) was determined to be 0.82.

Secondly, the ratio of k1 (formation of intermediate from VX and compound 10a) and k2 (degradation of VX by collapse of the intermediate) was determined by fitting the value of the maximum percentage of intermediate observed during the reaction (24% in the case of compound 10a). Finally, the values for k1 and k2 were determined by solving (while keeping the ratio fixed) the curves to obtain good fits of VX degradation, EMPA formation as well as formation and subsequent disappearance of the intermediate (see fitted curves in Figure 3). From the solved curves, the $t_{1/2}$ of VX was determined to be 2.7 hours, giving an indication of the speed of degradation by 10a. In terms of capacity, the theoretical maximum amount (n, in equivalents) of VX degradable by 10a was calculated from the recovery factor using 5% hydroxamic acid left-over as a threshold (thus solving $f^n < 0.05$, where f=recovery factor)) giving n=15 turnovers per molecule of VX in this particular case.

The reaction constant for spontaneous hydrolysis of VX in borate buffer pH 7.6 was determined to be 0.00294 $min^{-1}$.

Similar experiments are executed using differently substituted aromatic N-alkylhydroxamic acids (1Ob-g) and an aliphatic N-alkylated hydroxamic acid (10h).

The results of N-Methyl-4-methylbenzohydroxamic acid (10a) can be found in Table 1.

Example 2: Reactivation of sarin-inhibited acetylcholinesterase by hydroxamic acids

An experiment was conducted in which the reactivation potencies of N hydroxy-N-methylpyridine-3-carboxamide (NA-NMe-H; see compound 10e in Table 1 for the structure) and of N-hydroxy-N-methyl-N'-benzylpyridinium-3-carboxamide bromide (NbenzNA-NMe-H; see compound 10f in Table 1 for the structure) towards sarin-inhibited electric eel acetylcholinesterase were compared to those of the corresponding non-N-alkylated compounds, i.e. N-Hydroxypyridine-3-carboxamide (NAH) and N-Hydroxy-N'-benzylpyridinium-3-carboxamide bromide (NbenzNAH) respectively.

To 50 $_{\mu 1}$ enzyme solution (4.3 U/ml in 100mM phosphate buffer pH 7.4) was added sarin 5 $\mu$1 Sarin solution in water (1x $10^{-8}$M) and incubated for 30 min at 37˚C. To this mixture was added 5 $\mu$1 oxime solution (end concentrations: $10^{-5}$, $10^{-4}$, $10^{-3}$ and $10^{-2}$ M) and the mixture was incubated for 30 min at 37 ˚C. From each sample 20 $\mu$l was added to 500 $\mu$1 DTNB (0.6 mM in 100 mM phosphate buffer pH 7.4) and from the DTNB solutions 4*100 $\mu$1was transferred to a 96-well plate. To each well was added 100 $\mu$1ATCh (0.9 mM in MilliQ water) and the absorption was measured every 5 minutes for 15min (abs < 0.8).

The values were corrected with values obtained for spontaneous reactivation by executing a blanc experiment using Sarin-inhibited acetylcholinesterase.

Enzyme activity was calculated using the formula:

$$\% \text{ AChE activity} = S * 100 / P \qquad (I);$$

wherein S = Absorption value of test substance; and

wherein P = Absorption value of positive control (- 100% activity)

The results of this experiment are shown in Figure 5. The N-alkylated compounds do show some reactivation, albeit at high concentrations, thus showing the potential use of such compounds as reactivators. They are generally less effective than the corresponding non-alkylated derivatives. This may be explained by the modified reactivity as a result of N-alkylation. These experiments do not confirm nor exclude the putative reaction of isocyanate with the enzyme.

Table 1

| *Compound* | *Structure* | $k_1$ (*$M^1$.$min^{-1}$*) | $k_2$ (*$min^{-1}$*) | $t_{1/2}$ (*h*) | *Theoretical Capacity (mol VXI mol catalyst)* |
|---|---|---|---|---|---|
| 10a | 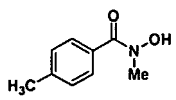 | 0.244 | 0.0092 | 2.7 | 15 |
| 10b | 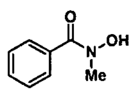 | | | | |
| 10e | 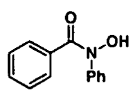 | | | | |
| 10d | 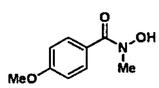 | | | | |
| 10e | 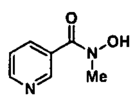 | | | | |
| 10f | 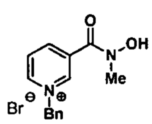 | | | | |
| 10g | 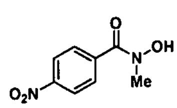 | | | | |
| 10h | 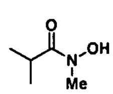 | | | | |

(continued)

| Compound | Structure | $k_1$ ($M^1.min^{-1}$) | $k_2$ ($min^{-1}$) | $t_{1/2}$ (h) | Theoretical Capacity (mol VXI mol catalyst) |
|---|---|---|---|---|---|
| 10i | 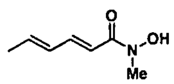 | | | | |

**Claims**

1. Coating composition comprising a curable compound and an N-alkylated hydroxamic acid according to the formula

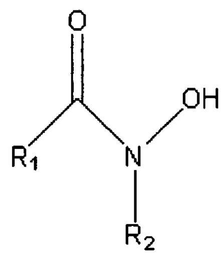

(1)

wherein $R_1$ is selected from the group consisting of alkyl groups, alkenyl groups, alkynyl groups, cycloalkyl groups, cycloalkenyl groups, cycloalkynyl groups, aryl groups, alkaryl groups, aralkyl groups, heteroalkyl groups, heteroalkenyl groups, heteroalkynyl groups, heterocycloalkyl groups, heterocycloalkenyl groups, heterocycloalkynyl groups, heteroaryl groups, heteroalkaryl groups, heteroaralkyl groups and polymeric moieties; and
wherein $R_2$ is selected from the group consisting of alkyl groups having 1-12 carbon atoms, cycloalkyl groups having 1-12 carbon atoms, aryl groups having 5-12 carbon atoms, alkaryl groups having 5-12 carbon atoms, aralkyl groups having 5-12 carbon atoms, heteroalkyl groups having 1-12 carbon atoms, heterocycloalkyl groups having 1-12 carbon atoms, heteroaryl groups having 3-12 carbon atoms, heteroalkaryl groups having 3-12 carbon atoms, heteroaralkyl groups having 3-12 carbon atoms.

2. Coating composition according to claim 1, wherein $R_2$ is selected from the group consisting of alkyl groups having 1-6 carbon atoms, preferably 1-3 carbon atoms and aryl groups having 5-8, preferably 5-6 carbon atoms.

3. Coating composition according to any of the previous claims, wherein $R_2$ is selected from the group consisting of methyl, ethyl, n-propyl, isopropyl, n-butyl and isobutyl.

4. Coating composition according to any of the previous claims, wherein $R_1$ is selected from the group consisting of benzyl, nitrobenzyl, methoxybenzyl, pyridinyl, methylbenzyl, pyridinium.

5. Coating composition according to any of claims 1-3, wherein $R_1$ is a polymeric moiety and wherein the polymeric moiety comprises one or more $-C(O)-N(R_2)-OH$ moieties.

6. Coating composition according to any of the previous claims, wherein the curable compound is urethane oligomers, urethane-acrylate oligomers, urethane-methacrylate oligomers, acrylate oligomers, acrylate monomers, epoxy oligomers, epoxy monomers, alkyd oligomers, epoxy resins, polyester resins, acrylic resins and mixtures thereof.

7. N-alkylated hydroxamic acid according to the formula

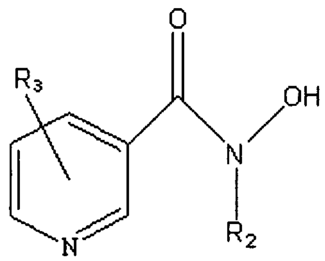

(2)

or

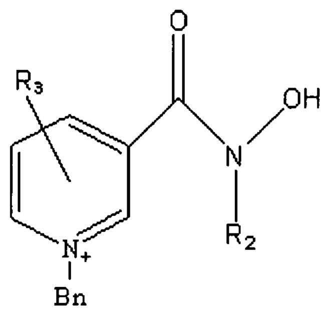

(3)

wherein Bn is benzyl, alkyl or a polymeric moiety; and
wherein $R_3$ is selected from the group consisting of hydrogen, alkyl and polymeric moieties.

**8.** Method for coating an object comprising applying a coating composition according to any of the previous claims to a surface of an object and curing the coating composition.

**9.** Object comprising a coating, which coating comprises a polymeric matrix and an N-alkylated hydroxamic acid as defined in any of claims 1-6.

**10.** Object according to claim 8, wherein the object is a vehicle, for example a car, a helicopter, a tank, a building, a tent or protective clothing.

**11.** Method for catalytically degrading an organophosphate or thiophosphate, comprising contacting the compound with an N-alkylated hydroxamic acid according to formula (1),
wherein $R_1$ is selected from the group consisting of alkyl groups, alkenyl groups, cycloalkyl groups, cycloalkenyl groups, aryl groups, alkaryl groups, aralkyl groups, heteroalkyl groups, heteroalkenyl groups, heterocycloalkyl groups, heterocycloalkenyl groups, heteroaryl groups, heteroalkaryl groups, heteroaralkyl groups and polymeric moieties; and
wherein $R_2$ is selected from the group consisting of alkyl groups having 1-12 carbon atoms, aryl groups having 3-12 carbon atoms, alkaryl groups having 4-12 carbon atoms and aralkyl groups having 4-12 carbon atoms.

**12.** Method according to claim 10, wherein the organophosphate or thiophosphate is a compound according to the formula

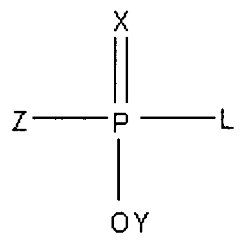

(4),

wherein
X is selected from the group consisting of S and O;
Y is selected from the group consisting of alkane, alkene, cycloalkane, alkarene, aralkane, heteroalkane, heteroalkene, heterocycloalkane, heteroalkarene, heteroaralkane
L is a leaving group, preferably selected from the group consisting of halogens, cyanide and thiol; and
Z is an organic group, preferably selected from the group consisting of alkane, alkene, cycloalkane, alkarene, aralkane, heteroalkane, heteroalkene, heterocycloalkane, heteroalkarene and heteroaralkane.

**13.** Use of an N-alkylated hydroxamic acid as defined in any of claims 1-6 as a catalyst for degrading an organophosphate or thiophosphate.

**14.** Use of an N-alkylated hydroxamic acid as defined in any of claims 1-6 in a decontamination solution.

**15.** N-alkylated hydroxamic acid as defined in any of claims 1-6 for use in the treatment of pesticide intoxication, insecticide intoxication or nerve agent poisoning.

**16.** N-alkylated hydroxamic acid for use in the treatment according to claim 14, wherein the treatment is a treatment of nerve agent poisoning,
wherein the nerve agent is selected from the group consisting of tabun, sarin, soman, cyclosarin, DFP, VX, VE, VG, VM, VR.

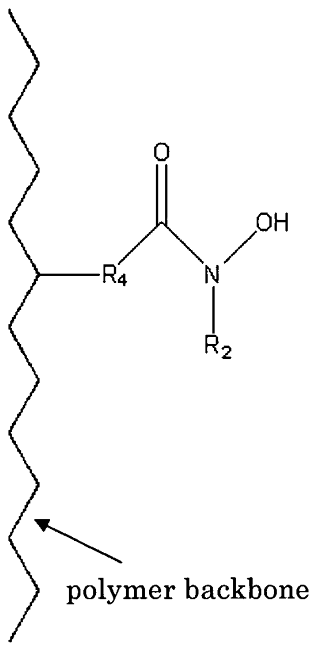



*Figure 1*

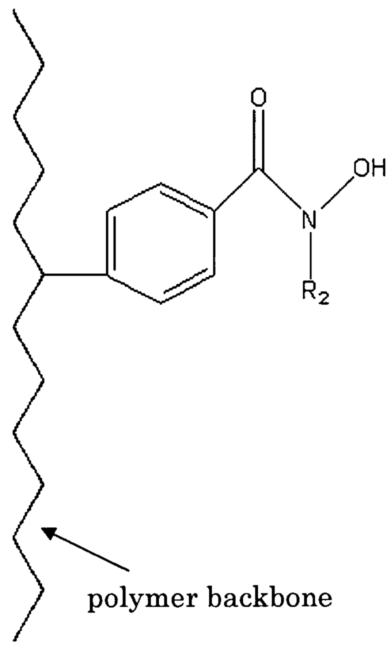



*Figure 2*

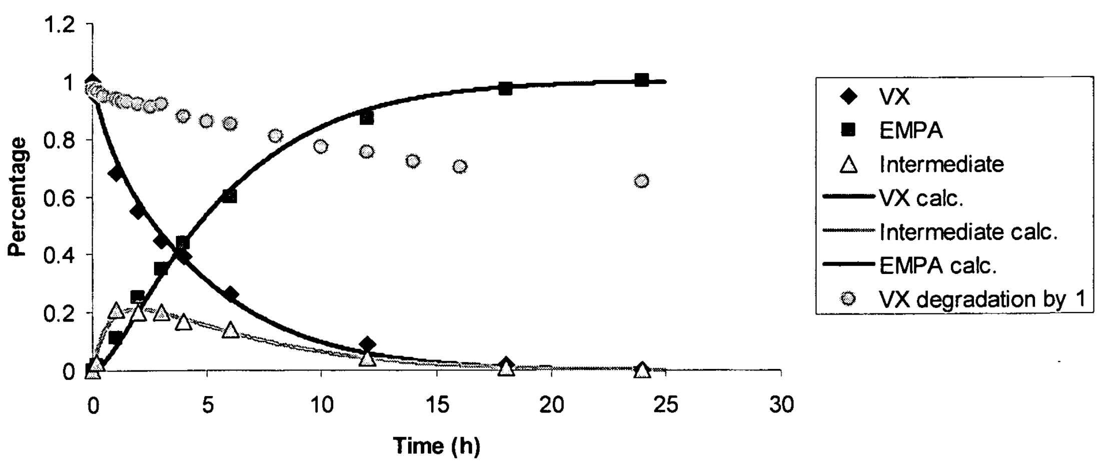



*Figure 3*

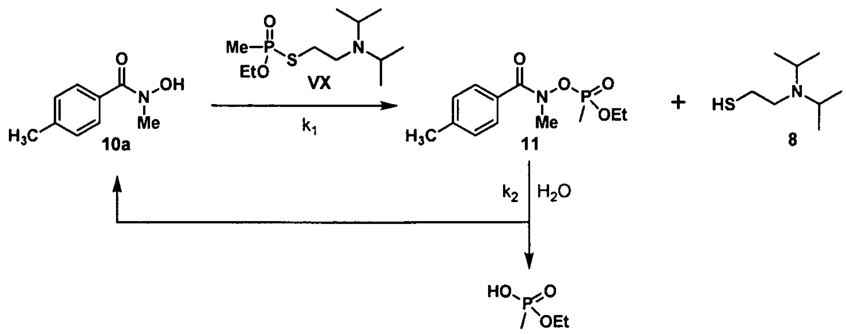


10a 11 8

EMPA

Observed byproducts:

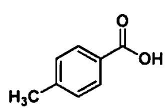

12

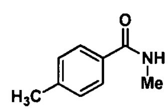

13

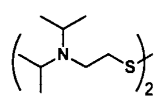

14

*Figure 4*

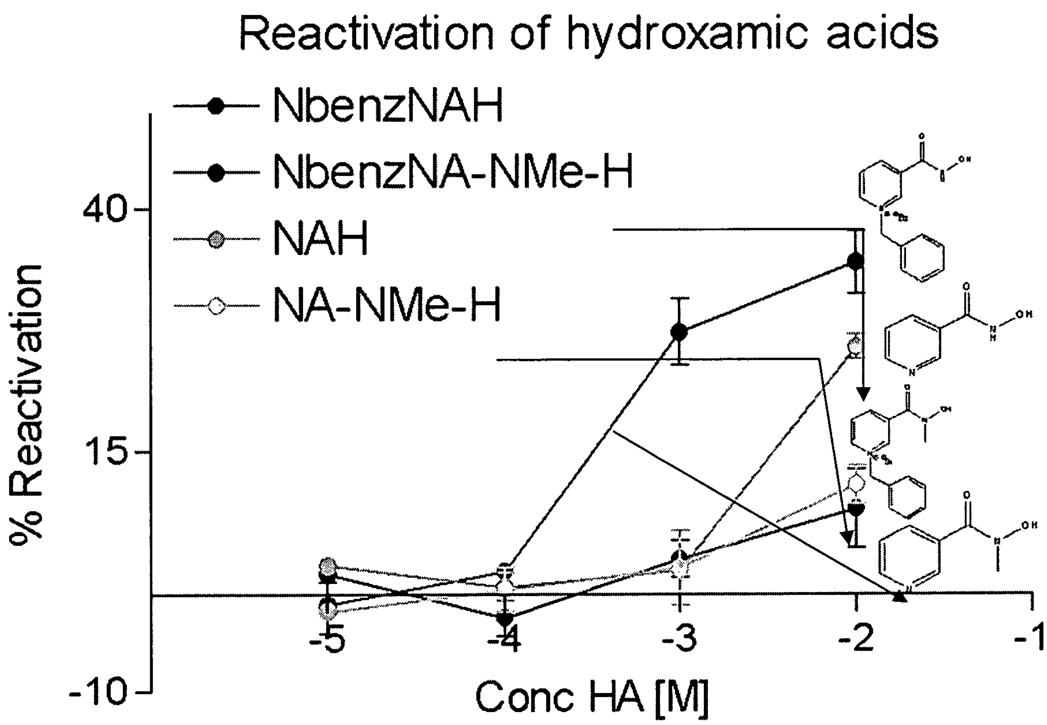
Reactivation of hydroxamic acids
NbenzNAH
NbenzNA-NMe-H
NAH
NA-NMe-H
40
15
-10
% Reactivation
-5
-4
-3
-2
-1
Conc HA [M]

*Figure 5*

Europäisches Patentamt
European Patent Office
Office européen des brevets

# EUROPEAN SEARCH REPORT

Application Number
EP 10 00 9090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILLIAM COHEN, BERNARD F. ERLANGER: "Studies on the Reactivation of Diethylphosphorylchymotrypsin", J.AM.CHEM.SOC., vol. 82, no. 15, August 1960 (1960-08), pages 3928-3934, XP002619578, DOI: 10.1021/ja01500a035 * N-phenylnicotinohydroxamic acid N-phenylbenzohydroxamic acid; page 3931, right-hand column, last paragraph - page 3933, left-hand column, paragraph 1 * * page 3928, right-hand column, paragraph 1 * | 1,2,4 | INV. A62D5/00 B01J31/40 C09D5/00 C09D7/12 A62D3/30 A62D3/35 |
| X,D | WO 2007/092029 A2 (MASSACHUSETTS INST TECHNOLOGY [US]; HATTON T ALAN [US]; BROMBERG LEV E) 16 August 2007 (2007-08-16) * page 57, lines 11-13; page 66, lines 22, 23; page 71, lines 3-8;claims 6,59,116,169,224,230,231 * * page 22, lines 10-29 * * page 8, lines 8-18 * * page 11, lines 13-20 * * page 12, line 4 * * page 46, line 12 - page 47, line 9 * * page 52, line 24 - page 54, line 29 * * page 72, lines 1-30 * * page 65, lines 15-28 * * page 66, lines 22-23 * | 1-6,8-10 | **TECHNICAL FIELDS SEARCHED (IPC)** A62D B01J C09D |
| X | US 2007/184970 A1 (GAO YONG [US]) 9 August 2007 (2007-08-09) * paragraphs [0010], [0016], [0018], [0019], [0021], [0029], [0039], [0040]; figure 1I; tables B,C * | 1-3,5,9 | |

-/--

~~The present search report has been drawn up for all claims~~

2

| Place of search | Date of completion of the search | Examiner |
|---|---|---|
| Munich | 4 February 2011 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 10 00 9090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 451 833 A1 (FUJI PHOTO FILM CO LTD [JP]) 16 October 1991 (1991-10-16)<br>* photosensitive materials 102-105; page 39, lines 3-7; claims 1-5; table 1; compounds I-1 - I-12,I-21, I24, I-28, I-35 - I38 *<br>* page 22, lines 43-54 *<br>* photosensitive materials 202-204; page 51, lines 54-57; table 3 *<br>* page 25, lines 22-36 *<br>----- | 1-6,8-10 | |
| X | US 3 541 106 A (KRENZER JOHN ET AL) 17 November 1970 (1970-11-17)<br>* claim 2; example 19 *<br>----- | 1,2,4,8,9 | |

TECHNICAL FIELDS SEARCHED (IPC)

~~The present search report has been drawn up for all claims~~

2

| Place of search | Date of completion of the search | Examiner |
|---|---|---|
| Munich | 4 February 2011 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 10 00 9090

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 8-10

☐ The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION SHEET B

Application Number
EP 10 00 9090

The Search Division considers that the present European patent application does not comply with the requirements of unity of invention and relates to several inventions or groups of inventions, namely:

1. claims: 1-6, 8-10

(i) coating composition, comprising (A) a N-alkylated hydroxamic acid and (B ) a curable compound
(ii) method for coating an object
(iii) object comprising a coating, which coating comprises a polymeric matrix and (A) an N-alkylated hydroxamic acid

---

2. claim: 7

N-alkylated hydroxamic acid according to formulae (2) or (3)

---

3. claims: 11-14

(i) method for catalytically degrading an organophosphate or thiophosphate, comprising contacting the compound with (A) an N-alkylated hydroxamic acid
(ii) use of (A) an N-alkylated hydroxamic acid as a catalyst for degrading an organophosphate or thiophosphate
(iii) use of (A) an N-alkylated hydroxamic acid in a decontamination solution

---

4. claims: 15, 16

N-alkylated hydroxamic acid (A) for use in the treatment of pesticide intoxication, insecticide intoxication or nerve agent poisoning

---

## ANNEX TO THE EUROPEAN SEARCH REPORT ON EUROPEAN PATENT APPLICATION NO. EP 10 00 9090

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2011

| Patent document cited in search report | Publication date | Patent family member(s) | Publication date |
|---|---|---|---|
| WO 2007092029 A2 | 16-08-2007 | US 2009218543 A1 | 03-09-2009 |
| US 2007184970 A1 | 09-08-2007 | NONE | |
| EP 0451833 A1 | 16-10-1991 | DE 69120710 D1 | 14-08-1996 |
| | | DE 69120710 T2 | 28-11-1996 |
| | | JP 2649855 B2 | 03-09-1997 |
| | | JP 3293666 A | 25-12-1991 |
| | | US 5206131 A | 27-04-1993 |
| US 3541106 A | 17-11-1970 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7598199 B


### Non-patent literature cited in the description


- **STOLBERG.** *Journal of the American Chemical Societey,* 1955, 765-767
- **HACKLEY.** *Journal of the American Chemical Societey,* 1955, 3651-3653
- **GILBERT et al.** *archives of biochemistry and biophysics,* 1961, vol. 99, 469-475